# EUROPEAN PATENT SPECIFICATION

(11) **EP 2 740 690 B1**
(45) Date of publication and mention of the grant of the patent: **04.11.2015**
(21) Application number: 13195158.4
(22) Date of filing: 29.11.2013
(51) Int. Cl.: B65G 21/10, B65G 47/51

(54) **A buffer arrangement and an elevator for a feed line for pieces of timber**
Pufferanordnung und Fahrstuhl für eine Zuleitung für Holzstücke
Agencement de tampon et élévateur pour une ligne d'alimentation de pièces de bois

(30) Priority: 06.12.2012 SE 1251380
(43) Date of publication of application: 11.06.2014
(73) Proprietor: Renholmen AB, 930 47 Byske (SE)
(72) Inventor: Lundqvist, Erik, 930 10 Lövånger (SE)
(74) Representative: Zacco Sweden AB

(56) References cited:
- WO-A1-99/01264
- DE-A1- 2 834 514
- SE-C2- 511 740
- SU-A1- 1 148 778
- US-A- 4 280 382
- US-A- 5 363 950

## Description

The present invention concerns a buffer arrangement for pieces of timber that are transported perpendicularly to their longitudinal direction and is intended to be arranged at a side track in connection with a timber input to a feed line in order to form buffer storage that can even out the supply of pieces of timber to a processing or treatment station arranged in a feed line, according to the introduction to claim 1. The invention concerns also an elevator according to the introduction to claim 9.

During the coarse sorting of timber at sawmills and other facilities at which timber is fed forwards in its transverse direction to various stations along a feed line, it is previously known to create in special side tracks in connection with a timber input to the feed line what are known as "buffer stretches", i.e. buffer zones, in which the pieces of timber can be temporarily collected in timber stores or areas, in order to even out variations in the supply of timber to a station that may arise as a consequence of problems in the feed of new timber or an interruption in any one of the upstream stations. A typical example of this is during the coarse sorting of timber in sawmills, whereby a flow of coarse-sawn timber is fed in its longitudinal direction via a timber input into a transverse transporter for end alignment and sorting in a processing and treatment station, followed by the formation of stacks and transport to a dryer facility for drying. It is not desirable to stop the saw under any circumstances during this type of production, not even if significant problems arise in any treatment or processing station downstream in the feed line. Due to the fact that the flow of timber from the saw can be rerouted to side tracks to be stored in timber-storage areas, which are connected to the timber input of the feed line by chain transporters, the saw can be kept in continuous operation while the problems in the coarse sorting are dealt with. As soon as the coarse sorting is in operation, the primary flow is routed automatically from the saw back to the coarse sorting, while at the same time the timber that has been temporarily stored in batches, known as "transport batches", is carried back mixed with the primary flow directly from the saw. It is normal that the coarse sorting be operated at an increased speed until the buffer storage is empty. The buffer function with buffering and emptying, together with automatic control of the speed of sorting, normally takes place fully automatically.

Known arrangements for the temporary collection of pieces of timber in buffer zones are, however, subject to several disadvantages, among which can be mentioned a complicated and bulky design. The buffer arrangements are normally designed with several transporters with tracks at different height levels in order to receive and lead the sawn timber to temporary storage in areas or compartments, whereby the timber is led to the buffer storage in a circuit or circular path, with a first track above the elevator and a second track from the buffer storage that is led, in order to return the timber, via the elevator. As a result of the complicated and extensive flow pathways of the timber from the timber input to the buffer zone, known buffer arrangements have relatively limited storage and transfer capacities relative to the space in the building that they occupy. Arranging these known buffer zones with several connected transport tracks at different levels is not only expensive, it also requires considerable amounts of space.

WO 99/01264 A1 discloses a buffer arrangement according to the preamble of claim 1 and elevator according to the preamble of claim 9. It describes an arrangement in a feed line for pieces of timber having an elevator and a transfer transporter one of which are arranged to be able to run in one single direction of transport only.

The purpose of the present invention is to achieve a completely new and more efficient type of buffer arrangement in a feed line for pieces of timber. In particular, it is aspired to achieve a buffer arrangement that demonstrates considerably higher storage capacity than previously known arrangements and that makes it possible to use more efficiently the existing space in the building for the temporary storage of timber, otherwise known as "buffering". Furthermore, it is aspired to achieve a buffer arrangement with a high transfer and transport capacity that makes it possible to offer an increased total amount of timber that is transported to and from the buffer arrangement per unit time. A third purpose of the invention is to achieve an elevator that is more efficient than previously known elevators, in particular an elevator that is suitable for use as a part of a buffer arrangement for the temporary storage of pieces of timber.

The two first purposes are achieved with a buffer arrangement that demonstrates the distinctive features and characteristics that are specified in claim 1. The third purpose of the invention is achieved with an elevator that has been given the distinctive features and characteristics that are specified in claim 9, and which elevator can advantageously be a component of a buffer arrangement according to the invention.

The insight for the present invention is based on the idea that by arranging an elevator with sufficient pivoting capacity in a vertical plane that the lower turning end of the elevator can be pivoted up to such a height level that the lower turning end forms a material chute that allows timber that has been transported on the elevator to be delivered down onto a transporter that is used not only for the temporary storage of timber but also to supply with timber an area that belongs to the elevator, the number of transport tracks that was previously required to form a buffer zone can be considerably reduced. In addition to the said pivoting capacity, it is important that the elevator also can be driven in two directions, i.e. forwards and backwards. An increase in efficiency is principally achieved through the elevator allowing the pieces of timber to be transported in two directions across the same, i.e. pieces of timber are transported by means of the elevator not only during filling of the buffer storage and transport of the pieces of timber from the timber input to the buffer storage, but also during emptying of the buffer storage and transport of the pieces of timber from the buffer storage to the timber input. By using such an elevator with the ability to create a two-way flow of timber along a linear side track at a buffer zone formed as a side track to a timber input at a feed line for timber that is transported perpendicularly to its longitudinal direction, the previous complicated and bulky designs with several transport paths at different levels in order to form buffer arrangements at sawmills can be essentially avoided.

The invention will be described in more detail below with the aid of an embodiment that is shown in the attached drawings, in which:

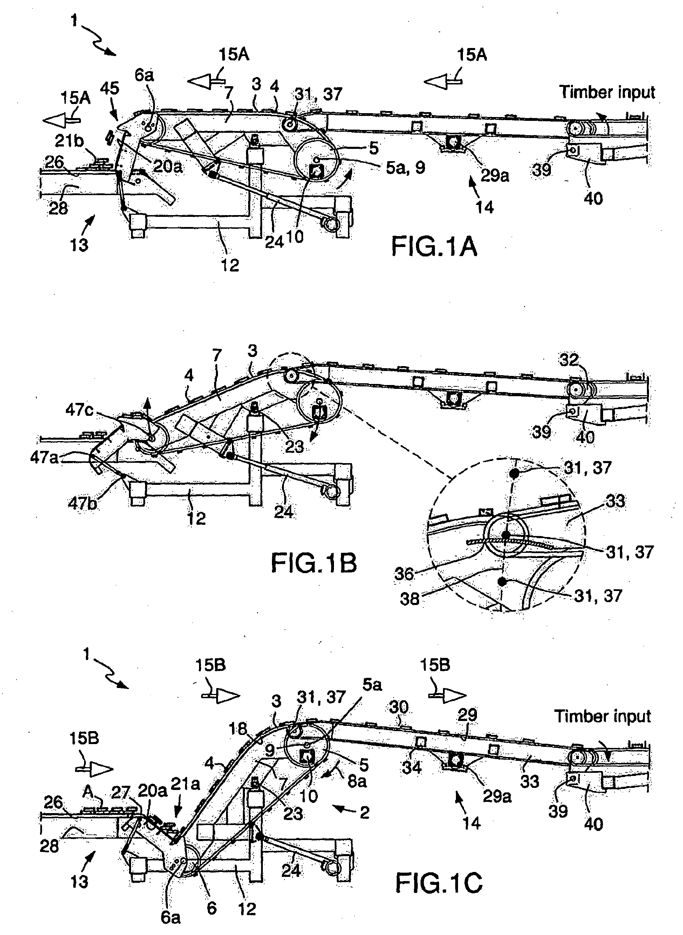

Figures 1A-1C show schematically side views of a buffer arrangement for a feed line according to the invention in the form of sequences and set into different operating conditions whereby Figure 1A shows the arrangement during the filling of buffer storage and transfer of the pieces of timber from a timber input to the said buffer storage, while Figure 1C shows the arrangement set into a condition for operation in a second direction of transport during emptying of the buffer storage and return of timber from the buffer storage to the timber input,

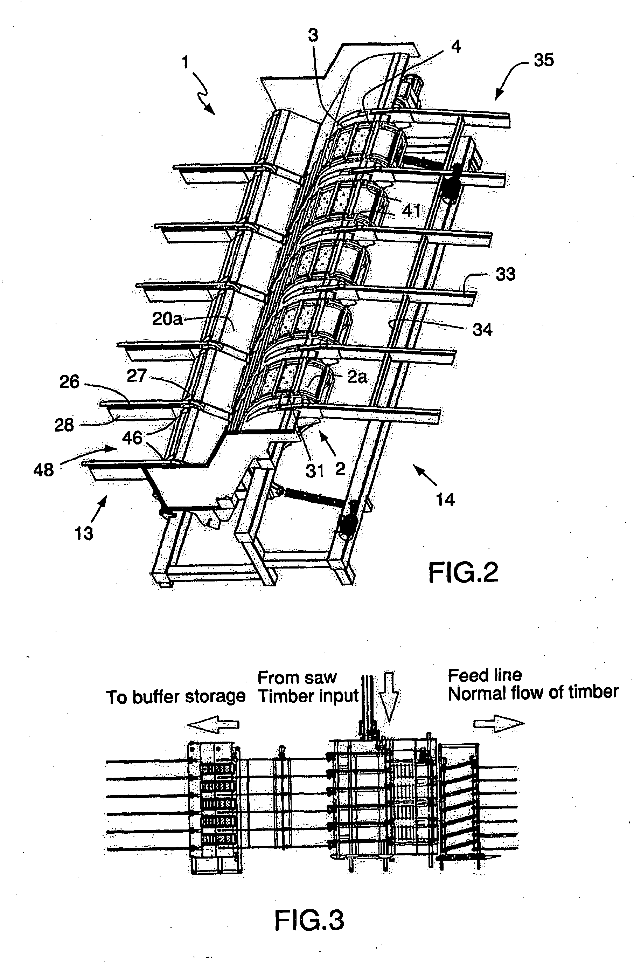

Figure 2 shows a perspective view of a buffer arrangement according to the invention set into a working or operating condition for the feed forwards of pieces of timber in a direction of transport during emptying of the buffer storage through the raising of pieces of timber from an elevator compartment to a higher level, and
Figure 3 shows a plan view of a part of a typical facility for the coarse sorting of timber that includes a timber input for sawn timber, a feed line in which timber is transported in a normal direction downstream to processing or treatment stations, and a side track arranged at the timber input with a buffer storage arrangement according to the invention for the temporary storage of timber.

Reference number 1 on the drawings denotes a buffer arrangement that is connected via a side track to a timber input for a feed line. For a better understanding of the invention, Figure 3 is referred to, whereby there is shown a part of a facility for the coarse sorting of timber that includes a timber input in which sawn timber is fed in along its longitudinal direction, a feed line in which the timber is transported in its transverse direction in a normal flow downstream to processing or treatment stations and a side track arranged at the timber input with a buffer storage arrangement according to the invention for the temporary storage of timber. For its temporary storage, sawn timber is driven to the left in the drawing to the buffer storage, and during emptying of the buffer storage the timber is returned from the buffer storage onwards in the direction to the right in the drawing towards the timber input and subsequently to the feed line for a normal flow of timber.

With reference to Figures 1A-1C and Figure 2, the buffer arrangement 1 comprises an elevator generally denoted by reference number 2 and consisting of a number of elevator segments 2a arranged next to each other and transverse to the feed line, each one of which comprises a pair of endless travelling transport elements consisting of transport chains 3 that run parallel to each other. Carriers 4 are attached at the chains 3 and arranged transversely between each pair of chains and with equal mutual separation along the circumference of the elevator segments 2a with respect to the chains. The buffer arrangement 1 is limited at its sides by protective plates that are shown in Figure 2, but which have been omitted in Figures 1A-1C for reasons for clarity. For the sake of simplicity, only the construction design of one of the elevator segments 2a will be described below. These segments together form the elevator 2 in its entirety while the elevator segments are identical. The expression "elevator" is used below to generally denote a transport arrangement whose principal task is to transfer objects from one level to a higher level and to collect objects from an elevator compartment by means of carriers.

As is made most clear by Figures 1A-1C, the transport chains 3 run over an upper and a lower end wheel, which define at the same time an upper 5 and a lower 6 turning end of the elevator 2, and which end wheels are mounted in bearings in a manner that allows rotation around horizontal axles 5a, 6a in a machine frame 7 that is a component of the elevator. The elevator 2 is driven by a shaft 9 that is common for the transport chains and is arranged in connection with the upper driving wheel 5. This shaft 9 is in turn driven by a transmission of a motor 10 that also is supported by the machine frame 7, and which motor is of reversible type such that it is possible to drive the carriers 4 in a first direction of transport from the timber input to the buffer storage for the filling of the buffer storage as is illustrated by the arrow 15A in Figure 1A, and in a second, reversed, direction that is illustrated by the arrow 15B in Figure 1C during emptying of the buffer storage and return of timber to the timber input. The arrangement comprises a frame denoted by reference number 12 that supports the elevator 2, and two transporters 13 and 14 one on each side of the elevator that are named the "storage transporter" and the "transfer transporter", respectively, in the application of the arrangement shown.

During filling of the buffer storage 21 b as is shown in Figure 1A, pieces of timber are transport over the elevator 2 in a first direction of transport 15A in order, passing a material chute 45, to be transferred for storage on a timber-support surface of the storage transporter 13. As is made clear by the drawings, the transfer transporter 14 is located at a level somewhat above the storage transporter 13 and is connected in a manner that transfers timber between the elevator 2 and the timber input, whereby timber is transported on an upper part of the endlessly running transport elements or chains of the said parts.

As is made most clear by Figure 1 B, the machine frame 7 of the elevator 2 is mounted to pivot at a horizontal shaft 23 in the framework 12 and can, by the influence of a linearly operating control and actuator means 24 that is mounted in a jointed manner with the machine frame 7 and the framework 12, be pivoted between a first operating condition that is shown in Figure 1A and transport of pieces of timber from the timber input via the transfer transporter 14, the elevator 2 and via the material chute 45, in order to be delivered down onto the storage transporter 13, and a second operating condition that is shown in Figure 1C and transport of the buffer storage to the timber input via the storage transporter 13, raising of the pieces of timber by means of the elevator 2 and onwards via the transfer transporter 14 to the said timber input in order subsequently to be distributed out to the feed line.

The horizontal shaft 23 and the linear control means 24 have been given such mutual locations that the elevator 2 can be pivoted between an essentially horizontal condition as is shown in Figure 1A in which the transport plane of the elevator is located essentially in line with the transport plane of the transfer transporter 14, and a condition that is angled down towards the horizontal plane as is shown in Figure 1C in which the transport plane of the elevator is angled upwards towards the transport plane of the transfer transporter 14. On activation of the linear control and actuator device 24 the lower turning wheel 6, and thus the lower turning end, of the elevator turns, as is illustrated with arrows in Figure 1B, upwards while at the same time the upper end wheel 5 at the upper turning end of the elevator 2 moves somewhat downwards, pivoted around the horizontal shaft 23.

With particular reference to Figure 1C, the arrangement is shown set into its second operating condition and, as is thus made clear, each of the transport chains 3 runs in its own guide 18 that is attached to the machine frame 7 and formed with a bowed shape, passing below with its carriers 4 a plane 20a that is inclined against the lower part of the elevator, along which plane the timber can glide and that can comprise, even though this is not shown in the drawings, roller conveyors or chains. The pieces of timber A can be collected and stored in an elevator compartment 21 a that is limited between the inclined plane 20a and the elevator 2. The elevator compartment 21 a is filled by the storage transporter 13 whereby the pieces of timber A are fed down towards the elevator compartment through the influence of the inclined plane 20a. Thus, the pieces of timber A move from the storage transporter 13 along the plane 20a and onwards down into the elevator compartment 21 a in order there to be brought into contact with the transport chains 3, whose carriers 4 engage from below in the pieces of timber and carry them upwards for further delivery at a higher level to the transfer transporter 14.

With reference also to Figure 2, the storage transporter 13 comprises a number of transport chains 26 that lie next to each other that, forming a transport plane that is located in the horizontal plane, run around an end wheel 27 that faces the elevator 2 and that is mounted in bearings such that it can rotate around a horizontal shaft in the relevant beam 28 extending in the direction of transport of the feed line. In a similar manner, the transfer transporter 14 comprises a number of transport chains 29 that lie next to each other and that are driven though a transmission by a motor 29a that can be reversed and that is supported by the transporter. In order to form a transport plane located in the horizontal plane, these transport chains 29 are arranged to run around a forward first end wheel 31 that faces the elevator 2 and a rear second end wheel 32 that faces away from the elevator where these two end wheels are mounted in a manner that allows rotation in horizontal shafts and are mounted at the end of the relevant beam 33 extending in the direction of transport of the feed line. The longitudinal beams 33 are mutually united with transverse beams or webs 34 in order in this way to form a continuous framework, generally denoted by reference number 35.

As is made most clear by Figure 1 B and the enlargement of detail, guide surfaces 36 are arranged at an upper end part of each elevator segment 2a at the sides of the machine frame 7, which guide surfaces act, through interaction with supports 37 that are arranged in the end of the framework 35 that faces the elevator 2, to support and carry the longitudinal beams 33 of the framework in such a manner that the framework can, in a displaceable manner, accompany the elevator 2 during resetting of its angle to the horizontal plane. To be more precise, a bearing that allows sliding is in this way formed that allows the framework 35 of the transfer transporter 14 to carry out not only pivoting but also sliding motion along a pre-determined pathway, which is illustrated in the enlargement of detail in Figure 1 B as displacements along a curve 38. The framework 35 is mounted to pivot at its second end that faces away from the elevator 2 at a horizontal shaft 39 that is mounted in bearings at a frame 40. Thus, the transfer transporter 14 is connected to the elevator 2 in a manner that allows sliding with parts that protrude into a horizontal plane and that partially interact with each other (one part supports the other), where the said connection in a manner that allows sliding is formed through the interaction between the said guide surfaces 36 of the elevator segments 2a and supports 37 that rest on the said guide surfaces and that are arranged on the protruding beams 33 of the framework 35. The transfer transport 14 in this way can pivot in a displaceable and accompanying manner around its rear horizontal pivot shaft 39 that faces away from the elevator 2 together with the elevator 2, to be more precise to pivot together with an upper part of the endlessly running transport chains 3 of the elevator 2 that transport timber. Due to the fact that the longitudinal beams 33 of the framework 35 extend in an overlapping manner into openings 41 that are formed between the elevator segments 2a located next to each other, a transport route is obtained between the elevator 2 and the transfer transporter 14 that at the opposing ends of the said units is unbroken, independent of the angle between the parts. As has been mentioned above, these sliding pivoting movements take place in a horizontal plane along a pathway as is illustrated by the line 38 in the enlargement of detail in Figure 1 B.

Figures 1A-1C make it clear that the elevator 2 is mounted at the frame 12 to pivot around its horizontal shaft 23 between a first operating condition for the filling of the buffer storage as is shown in Figure 1A and transport of pieces of timber from the timber input in the direction of transport 15A to a lower level and the transfer of pieces of timber to the storage transporter 13 for temporary storage. There is also a second operating condition for the emptying of the buffer storage that is shown in Figure 1C and transport of the pieces of timber A from the storage transporter 13 in the direction of transport 15B via the inclined plane 20a and onwards via the carriers 4 of the elevator 2 to a higher level and the transfer transporter 14, and finally back to the timber input. As is made clear by Figure 1A, the elevator 2 is, in the first operating condition, so pivoted around its horizontal shaft 23 that a material chute generally denoted by reference number 45 is formed between the lower upwardly pivoted turning end 6 of the elevator and the transport plane of the said storage transporter 13. The transport planes of the elevator 2 and of the transfer transporter 14 thus are located essentially in line one after the other in the horizontal plane. The motor 10 of the elevator is in this way set to rotate in such a manner that the pieces of timber A that are present on the elevator 2 move towards the buffer storage, which is illustrated by the arrow 15A in Figure 1A. As a consequence of this, the pieces of timber A fall down from the material chute 45 under the control of the inclined plane 20a in order eventually to be collected at the timber-carrying surface of the storage transporter 13. Also the storage transporter 13 is equipped for operation in two different directions of transport 15A, 15B in order to make it possible to displace the pieces of timber collected into high "transport batches" on the storage transporter further into the storage zone by successively moving the transport chains 26, and thus the piles of timber that rest on these, backwards.

As is made most clear by a combined study of Figures 1A-1C, the inclined plane 20a is so designed and is so connected to the lower end part or turning end 6 of the elevator 2, or alternatively to some other moving part that is arranged to be displaced relative to the elevator, that it bridges over the distance between the lower turning end 6 of the elevator 2 and the storage transporter 13 in each one of the two operating conditions of the elevator. To be more precise, not only in the first operating condition during the filling of the buffer storage that is shown in Figure 1A but also in the second operating condition during emptying of the buffer storage, whereby the inclined plane 20a ensures that the pieces of timber A that are transported on the storage elevator can slide down in the said elevator compartment 21 a in order to be raised to a higher level by means of the elevator. In order to be able to take up these two working positions, the inclined plane 20a includes a knee-joint mechanism that consists of, in addition to the said inclined plane 20a over which the pieces of timber can move by sliding, a pair of link arms 46 connected in a jointed manner to one end of the plane and located at a distance from each other such that together they form a pair support legs that is similar to a fork. The sliding plane 20a and the pair of link arms 46 thus form a doubly jointed unit that is, in addition to its central horizontal axis of pivoting 47a, connected in a jointed manner at its ends that face away from each other to the lower end of the elevator 2 and the frame 12, respectively, in order to offer linked pivoting motion around the relevant horizontal axes 47b, 47c, the latter of which is coaxial with the axis of rotation 6a of the lower end wheel 6 for the elevator.

Figure 2 shows in more detail how the fork-like pair of link arms 46 are arranged for each elevator segment 2a such that it can pivot in a linked and overlapping manner in a vertical plane within the space generally denoted by 48 that is limited between two adjacent beams 28 of the storage transporter 13 that also protrude relative to the mechanism. Due to the fact that the knee-joint mechanism can pivot a certain distance in between the protruding beams 28 of the storage transport 13 the inclined plane 20a has been assigned the ability to take up two alternative positions in which it is able to guide down timber equally well in each one of the two operating conditions of the elevator.

In the first operating condition, which is shown in Figure 1A, the plane 20a has been set into a condition in which the plane, inclined downwards towards the horizontal plane, bridges the distance between the lower turning end 6 of the elevator 2 and the storage transporter 13, and forms a transport route for the timber down towards the storage transporter 13. The plane 20a in this condition together with the elevator 2 forms a curve that when viewed from the side appears to be convex or bulging upwards from the horizontal plane. The timber A that has been fed forwards on the elevator can thus slide down, via the material chute 45, onto the storage transporter 13.

In the second operating condition as shown in Figure 1C the plane 20a has been set into a condition where the plane, inclined downwards towards the horizontal plane, bridges the distance between the lower turning end 6 of the elevator 2 and the elevator compartment 21 a. The plane 20a in this condition together with the elevator 2 forms a transport pathway for the timber in the form of a curve that, when viewed from the side, appears to be concave or bulging down towards the horizontal plane. By the influence of the carriers 4 of the elevator 2, pieces of timber A are collected from the elevator compartment and are carried by means of the elevator up to a higher level to be returned, passing the transfer transporter, to the timber input. It can be mentioned that a knee-joint mechanism of the type described above, which can turn outwards or inwards in a vertical plane through joint connections 47a, 47b, 47c that have the nature of links, is arranged at each elevator segment 2a, and that a series of knee-joint mechanisms, one for each elevator segment 2a and arranged next to each other, forms an inclined plane 20a that extends essentially transverse to the feed line, of the type that is shown in Figure 2.

The invention is not limited to that which has been described above and shown in the drawings: it can be changed and modified in several different ways within the scope of the attached patent claims.

## Claims

1. A buffer arrangement for pieces of timber that are transported perpendicular to their longitudinal direction, and intended to be arranged in a side track in connection to a timber input at a feed line in order to form buffer storage that can even out the supply of pieces of timber to a processing or treatment station arranged in a feed line, which buffer arrangement comprises an elevator (2) that demonstrates an endlessly running transport element (3), an upper and a lower turning end (5, 6) that are defined by the said transport elements and which elevator is intended to collect via carriers (4) pieces of timber (A) from an elevator compartment (21a) and to transfer these to a higher level, a storage transporter (13) that delivers via a plane (20a) pieces of timber to the elevator compartment (21 a), a transfer transporter (14) that is in connection with the timber input and with which pieces of timber can be transferred to the elevator, **characterised in that** the transfer transporter (14) is connected in a manner that allows the transfer of pieces of timber to a timber-transporting upper part of the transport element (3) of the elevator (2), that not only the elevator (2) but also the transfer transporter (14) can be set into a first or a second operating condition for operation in two opposing directions of transport, that the elevator is supported via a shaft (23) in a manner that allows pivoting on a frame (12) and can be set in a vertical plane either into a first condition for transport of pieces of timber (A) from the transfer transporter (14) in a first direction of transport (15A) towards buffer storage, or into a second condition for transport of pieces of timber from the elevator compartment (21 a) to the transfer transporter (14) in a second direction of transport (15B), whereby the elevator in the first operating condition is so pivoted that a material chute (45) is formed between the lower turning end (6) of the elevator (2) and the storage transporter (13), and **in that** pieces of timber that are transported on the elevator (2) in the first direction of transport (15A) are guided over the material chute and onwards down onto the storage transporter.

2. The buffer arrangement according to claim 1, whereby the storage transporter (13) can be set into operating conditions for operation with two opposing directions of transport (15A, 15B).

3. The buffer arrangement according to any one of claims 1-2, whereby the plane (20a) is connected at a lower end section of the elevator (2), the lower turning end (6) or some moving part that is arranged to be displaced relative to the elevator during pivoting, in such a manner that the plane (20a) bridges the distance between the lower turning end of the elevator and the transport plane for pieces of timber of the storage transporter (13) not only when the elevator is set into its first or its second transport condition and transport of pieces of timber in opposing directions (15A, 15B).

4. The buffer arrangement according to claim 3, whereby the inclined plane (20a) forms part of a double-jointed mechanism that is through horizontal shafts (47a, 47b, 47c) so united between the lower part or lower turning end (6) of the elevator (2) and the framework (12), or between some other stationary unit, in a manner that allows jointed movement that the mechanism and the elevator form between them a transport pathway for timber that when viewed from the side appears to be convex or bulging upwards from a horizontal plane when the arrangement has been set into its first transport condition in the direction (15A) towards the buffer storage, or concave or bulging downwards towards a horizontal plane when the arrangement has been set into its second transport condition in the direction (15B) away from the buffer storage.

5. The buffer arrangement according to any one of claims 1-4, whereby the plane (20a) is arranged to carry out pivoting motion in a vertical plane within a space (48) that is limited between two adjacent beams 28 of the storage transporter (13) that are protruding towards the elevator (2).

6. The buffer arrangement according to any one of claims 1-5, whereby the transfer transporter (14) is connected at one of its ends in a manner that allows sliding to the elevator (2) with parts (33, 41) protruding into each other in a horizontal plane and partially interacting, which parts are arranged to support each other in such a supporting manner that the transfer transporter accompanies the elevator during the resetting of its angle to the horizontal plane.

7. The buffer arrangement according to claim 6, whereby the connection that allows sliding is formed through interaction between guide surfaces (36) and support means (37) arranged in openings (41) that are limited by a number of elevator segments (2a) that are located transverse to the feed line separated at a distance from each other and a number of beams (33) that protrude from the transfer transporter (14) and that are inserted into the said openings.

8. The buffer arrangement according to claim 7, whereby the guide surfaces (36) are arranged in a upper end section of a machine frame (7) that is a component of each elevator segment (2a) and that the support means (37) are arranged in a forward part of the protruding beams (33) that are components of the transfer transporter,(14).

9. An elevator intended to be placed in a feed line for pieces of timber that are transported perpendicularly to their longitudinal directions, comprising a timber-carrying transport plane formed from a number of endless transport elements (3) that run parallel to each other and that have an upper and a lower turning end (5, 6), a number of carriers (4) distributed along the length of the transport elements, a machine frame (7) that is supported on a frame (12) in a manner that allows pivoting via a shaft (23) and that through the influence of a control and actuator means (24) allows the transport plane to be pivoted in a vertical plane and thus to take up either a first or a second angular position to the horizontal plane, **characterised in that** it comprises a first and a second operating condition for driving the transport elements (3) in two opposing directions (15A, 15B) of transport, a knee-joint mechanism that demonstrates a plane (20a), which plane is united with the machine framework (7) via a horizontal shaft (47c) in a manner that allows pivoting in connection with the lower turning end (6), and which mechanism is so connected in a manner that allows pivoting via a series of horizontal shafts (47a, 47b, 47c) with the framework (12) or with some other stationary unit;
- that the plane (20a), when setting the machine framework (7) into its first angular position, forms a material chute (45) where the plane is set at an angle downwards away from the transport plane, whereby pieces of timber are guided over the material chute when the transport elements move in the first direction of transport (15A);
- that the plane (20a), when setting the machine framework (7) into its second angular position, forms an elevator compartment (21 a) where the plane is set at an angle upwards towards the transport plane, whereby the carriers (4) collect pieces of timber from the elevator compartment when the transport elements move in the second direction of transport (15A).

10. The elevator according to claim 9, whereby when set into its first angular position the machine framework (7) is so pivoted on the shaft (23) that the timber-carrying transport plane of the transport elements (3) is essentially parallel to the horizontal plane and when set into its second operating condition the machine framework (7) is so pivoted on the shaft (23) that the timber-carrying transport plane of the transport elements (3) has taken up an angle to the horizontal plane at which the transport plane is inclined at an angle up towards a higher level.

## Patentansprüche

1. Pufferanordnung für Holzstücke, die senkrecht zu ihrer Längsrichtung transportiert werden und in einer Ausweiche in Verbindung zu einer Holzeinspeisung an einer Zuleitung zur Bildung einer Pufferlagerung anzuordnen sind, welche im Stande ist, das Zuführen von Holzstücken zu einer in einer Zuleitung angeordneten Verarbeitungs- oder Behandlungsstation auszugleichen, welche Pufferanordnung einen Fahrstuhl (2), welcher ein endlos laufendes Transportelement (3) darstellt, ein oberes und ein unteres Drehende (5, 6), die durch die Transportelemente definiert sind, und welcher Fahrstuhl dazu dient, über Träger (4) Holzstücke (A) aus einer Fahrstuhlkammer (21 a) zu sammeln, und diese an eine höhere Stufe zu übertragen, einen Lagerungstransporter (13), welcher über eine Ebene (20a) der Fahrstuhlkammer (21 a) Holzstücke zuführt, einen Übertragungstransporter (14), welcher mit der Holzeinspeisung in Verbindung steht, und mit welchem Holzstücke an den Fahrstuhl übertragbar sind, umfasst, **dadurch gekennzeichnet, dass** der Lagerungstransporter (14) auf eine solche Weise verbunden ist, dass die Übertragung von Holzstücken an einen holztransportierenden oberen Teil des Transportelements (3) des Fahrstuhls (2) ermöglicht wird, dass nicht nur der Fahrstuhl (2), sondern auch der Übertragungstransporter (14) in einen ersten oder einen zweiten Betriebszustand zum Betrieb in zwei entgegengesetzten Transportrichtungen gesetzt werden kann, dass der Fahrstuhl über eine Welle (23) auf eine solche Weise unterstützt wird, dass eine Drehung auf einem Rahmen (12) ermöglicht wird, und in einer Vertikalebene entweder in einen ersten Zustand zum Transportieren von Holzstücken (A) vom Übertragungstransporter (14) in einer ersten Transportrichtung (15A) zur Pufferlagerung hin oder in einen zweiten Zustand zum Transportieren von Holzstücken von der Fahrstuhlkammer (21 a) an den Übertragungstransporter (14) in einer zweiten Transportrichtung (15B) gesetzt werden kann, wobei der Fahrstuhl im ersten Betriebszustand derart gedreht wird, dass ein Materialschacht (45) zwischen dem unteren Drehende (6) des Fahrstuhls (2) und dem Lagerungstransporter (13) gebildet wird, und dass Holzstücke, die im Fahrstuhl (2) in der ersten Transportrichtung (15A) transportiert werden, über den Materialschacht und weiter nach unten auf den Lagerungstransporter geführt werden.

2. Pufferanordnung nach Anspruch 1, wobei der Lagerungstransporter (13) zum Betrieb mit zwei entgegengesetzten Transportrichtungen (15A, 15B) in Betriebszustände gesetzt werden kann.

3. Pufferanordnung nach einem der Ansprüche 1-2, wobei die Ebene (20a) an einem unteren Endabschnitt des Fahrstuhls (2), des unteren Drehendes (6) oder eines Bewegungsteils, der so angeordnet ist, dass er während der Drehung in Bezug auf den Fahrstuhl verschoben wird, derart verbunden ist, dass die Ebene (20a) den Abstand zwischen dem unteren Drehende des Fahrstuhls und der Transportebene für Holzstücke des Lagerungstransporters (13) überbrückt, nicht nur wenn der Fahrstuhl in seinen ersten oder seinen zweiten Transportzustand und Transport von Holzstücken in entgegengesetzten Richtungen (15A, 15B) gesetzt wird.

4. Pufferanordnung nach Anspruch 3, wobei die geneigte Ebene (20a) einen Teil einer Doppelgelenkvorrichtung bildet, die über horizontale Wellen (47a, 47b, 47c) zwischen dem unteren Teil oder dem unteren Drehende (6) des Fahrstuhls (2) und dem Rahmen (12) oder zwischen einer anderen feststehenden Einheit auf eine solche Weise verbunden ist, dass eine gelenkige Bewegung ermöglicht wird, dass die Vorrichtung und der Fahrstuhl zwischen ihnen einen Transportweg für Holz bilden, der, wenn von der Seite gesehen, nach oben von einer Horizontalebene, wenn die Anordnung in ihren ersten Transportzustand in der Richtung (15A) zur Pufferlagerung hin gesetzt worden ist, konvex oder wulstig oder nach unten zu einer Horizontalebene hin, wenn die Anordnung in ihren zweiten Transportzustand in der Richtung (15B) weg von der Pufferlagerung gesetzt worden ist, konkav oder wulstig zu sein scheint.

5. Pufferanordnung nach einem der Ansprüche 1-4, wobei die Ebene (20a) dazu ausgelegt ist, eine Drehbewegung in einer Vertikalebene innerhalb eines Raums (48) auszuführen, der zwischen zwei benachbarten Balken 28 des Lagerungstransporters (13) begrenzt ist, die in Richtung des Fahrstuhls (2) vorstehen.

6. Pufferanordnung nach einem der Ansprüche 1-5, wobei der Übertragungstransporter (14) an einem seiner Enden derart verbunden ist, dass die Gleitung zum Fahrstuhl (2) mit Teilen (33, 41) ermöglicht wird, die in einer Horizontalebene ineinander hineinragen und teilweise miteinander in Wechselwirkung stehen, welche Teile so angeordnet sind, dass sie sich gegenseitig unterstützen, auf eine solche unterstützende Art und Weise, dass der Übertragungstransporter den Fahrstuhl während des Zurücksetzens seines Winkel in die Horizontalebene begleitet.

7. Pufferanordnung nach Anspruch 6, wobei die die Gleitung ermöglichende Verbindung durch eine Wechselwirkung zwischen Führungsflächen (36) und Stützorganen (37) gebildet wird, die in Öffnungen (41) angeordnet sind, die durch eine Anzahl von quer zur Zuleitung beabstandet voneinander angeordneten Fahrstuhlabschnitten (2a) und eine Anzahl von aus dem Übertragungstransporter (14) herausragenden und in die Öffnungen eingesetzten Balken (33) begrenzt sind.

8. Pufferanordnung nach Anspruch 7, wobei die Führungsflächen (36) in einem oberen Endabschnitt eines Maschinenrahmens (7) angeordnet sind, der eine Komponente jedes Fahrstuhlsegments (2a) ist, und dass die Stützorgane (37) in einem vorderen Teil der herausragenden Balken (33) angeordnet sind, welche Komponenten des Übertragungstransporters (14) sind.

9. Fahrstuhl, der in einer Zuleitung für senkrecht zu ihren Längsrichtungen transportierte Holzstücke anzuordnen ist, umfassend eine holztragende Transportebene, die aus einer Anzahl von endlosen Transportelementen (3) gebildet ist, die parallel zueinander verlaufen, und die ein oberes und ein unteres Drehende (5, 6) aufweisen, eine Anzahl von entlang der Länge der Transportelemente verteilten Trägern (4), einen Maschinenrahmen (7), der auf einem Rahmen (12) derart gelagert ist, dass eine Drehung über eine Welle (23) ermöglicht wird, und dass durch die Einwirkung einer Steuer- und Aktuatoreinrichtung (24) eine Drehung der Transportebene in einer Vertikalebene und somit die Einnahme entweder einer ersten oder einer zweiten Winkelstellung zur Horizontalebene ermöglicht wird, **dadurch gekennzeichnet, dass** er einen ersten und einen zweiten Betriebszustand zum Antreiben der Transportelemente (3) in zwei entgegengesetzten Transportrichtungen (15A, 15B), eine eine Ebene (20a) darstellende Kniegelenkvorrichtung umfasst, welche Ebene mit dem Maschinenrahmen (7) über eine horizontale Welle (47c) derart verknüpft ist, dass eine Drehung in Verbindung mit dem unteren Drehende (6) ermöglicht wird, und welche Vorrichtung auf eine solche Weise verbunden ist, dass eine Drehung über eine Reihe von horizontalen Wellen (47a, 47b, 47c) mit dem Rahmen (12) oder mit einer anderen feststehenden Einheit ermöglicht wird;
- dass die Ebene (20a), wenn der Maschinenrahmen (7) in seine erste Winkelstellung gebracht wird, einen Materialschacht (45) bildet, wobei die Ebene in einem Winkel nach unten weg von der Transportebene gesetzt wird, wobei Holzstücke über den Materialschacht geführt werden, wenn die Transportelemente sich in der ersten Transportrichtung (15A) bewegen;
- dass die Ebene (20a), wenn der Maschinenrahmen (7) in seine zweite Winkelstellung gebracht wird, eine Fahrstuhlkammer (21 a) bildet, wobei die Ebene in einem Winkel nach oben zur Transportebene hin gesetzt wird, wobei die Träger (4) Holzstücke aus der Fahrstuhlkammer sammeln, wenn die Transportelemente sich in der zweiten Transportrichtung (15A) bewegen.

10. Fahrstuhl nach Anspruch 9, wobei der Maschinenrahmen (7), wenn er in seine erste Winkelstellung gebracht wird, derart auf der Welle (23) gedreht wird, dass die holztragende Transportebene der Transportelemente (3) im Wesentlichen parallel zur Horizontalebene ist, und der Maschinenrahmen (7), wenn er in seinen zweiten Betriebszustand gesetzt wird, derart auf der Welle (23) gedreht wird, dass die holztragende Transportebene der Transportelemente (3) einen Winkel zur Horizontalebene eingenommen hat, bei der die Transportebene in einem Winkel zu einer höheren Stufe hin geneigt ist.

## Revendications

1. Agencement de tampon pour des pièces de bois qui sont transportées perpendiculairement à leur direction longitudinale, et conçu pour être arrangé dans une voie latérale en communication avec une entrée de bois à une conduite d'alimentation en vue de former un stockage tampon pour égaliser l'alimentation de pièces de bois à une station de préparation et de traitement arrangée dans une conduite d'alimentation, ledit agencement de tampon comprenant un ascenseur (2) qui présente un élément de transport à roulement sans fin (3), une extrémité de rotation supérieure et inférieure (5, 6) qui sont définies par lesdits éléments de transport et ledit ascenseur est destiné à recueillir via des supports (4) des pièces de bois (A) à partir d'un compartiment d'ascenseur (21 a) et à transférer celles-ci à un niveau supérieur, un transporteur de stockage (13) qui délivre par l'intermédiaire d'un plan (20a) des pièces de bois au compartiment d'ascenseur (21 a), un transporteur de transfert (14) qui est en communication avec l'entrée de bois et par lequel des pièces de bois peuvent être transférées à l'ascenseur, **caractérisé en ce que** le transporteur de transfert (14) est relié d'une manière qui permet le transfert des pièces de bois à une partie supérieure de transport de bois de l'élément de transport (3) de l'ascenseur (2), **en ce que** non seulement l'ascenseur (2) mais aussi le transporteur de transfert (14) peuvent être mis dans une première ou une deuxième condition de fonctionnement pour un fonctionnement dans deux directions opposées de transport, **en ce que** l'ascenseur est supporté par l'intermédiaire d'un arbre (23) d'une manière qui permet le pivotement sur un cadre (12) et peut être fixé dans un plan vertical, soit dans une première condition pour le transport de pièces de bois (A) à partir du transporteur de transfert (14) dans une première direction de transport (15A) en direction de stockage tampon, ou dans une deuxième condition pour le transport de pièces de bois à partir du compartiment d'ascenseur (21 a) au transporteur de transfert (14) dans une deuxième direction de transport (15B), l'ascenseur dans la première condition de fonctionnement étant pivoté si bien qu'une glissière de matériau (45) est formée entre l'extrémité tournante inférieure (6) de l'ascenseur (2) et le transporteur de stockage (13), et **en ce que** des pièces de bois qui sont transportées sur l'ascenseur (2) dans la première direction de transport (15A) sont guidées au-dessus de la glissière de matériau et plus loin vers le bas sur le transporteur de stockage.

2. Agencement de tampon selon la revendication 1, dans lequel le transporteur de stockage (13) peut être placé dans des conditions de fonctionnement pour un fonctionnement avec deux directions opposées de transport (15A, 15B).

3. Agencement de tampon selon l'une quelconque des revendications 1 à 2, dans lequel le plan (20a) est relié à une section d'extrémité inférieure de l'ascenseur (2), l'extrémité tournante inférieure (6) ou une pièce mobile quelconque qui est agencée pour être déplacée par rapport à l'ascenseur lors du pivotement, d'une telle manière que le plan (20a) comble la distance entre l'extrémité tournante inférieure de l'ascenseur et le plan de transport pour les pièces de bois du transporteur de stockage (13), non seulement lorsque l'ascenseur est placé dans sa première ou son deuxième condition de transport et le transport des pièces de bois dans des directions opposées (15A, 15B).

4. Agencement de tampon selon la revendication 3, dans lequel le plan incliné (20a) fait partie d'un mécanisme à double articulation qui, à travers des arbres horizontaux (47a, 47b, 47c), est uni entre la partie inférieure ou l'extrémité tournante inférieure (6) de l'ascenseur (2) et le cadre (12), ou entre une autre unité stationnaire, si bien qu'un mouvement articulé est permis et que le mécanisme et l'ascenseur forment entre eux une voie de transport pour du bois qui lorsqu'elle est vue depuis le côté semble être convexe ou bombée vers le haut à partir d'un plan horizontal lorsque l'agencement a été mis dans sa première condition de transport dans la direction (15A) vers le stockage tampon, ou concave ou bombée vers le bas vers un plan horizontal lorsque l'arrangement a été mis dans sa deuxième condition de transport dans la direction (15B) du stockage tampon.

5. Agencement de tampon selon l'une quelconque des revendications 1 à 4, dans lequel le plan (20a) est agencé pour effectuer un mouvement de pivotement dans un plan vertical dans un espace (48) qui est limité entre deux poutres adjacentes 28 du transporteur de stockage (13 ) qui sont en saillie vers l'ascenseur (2).

6. Agencement de tampon selon l'une quelconque des revendications 1 à 5, dans lequel le transporteur de transfert (14) est relié à l'une de ses extrémités d'une manière qui permet le coulissement de l'ascenseur (2) avec des parties (33, 41) faisant saillie l'une dans l'autre dans un plan horizontal et l'une coopérant avec l'autre, lesdites parties étant disposées pour se soutenir mutuellement d'une telle manière de support que le transporteur de transfert accompagne l'ascenseur au cours repositionnement de son angle par rapport au plan horizontal.

7. Agencement de tampon selon la revendication 6, dans lequel la liaison qui permet le glissement est formée par l'interaction entre les surfaces de guidage (36) et des moyens de support (37) disposés dans des ouvertures (41) qui sont limitées par un certain nombre de segments d'ascenseur (2a) qui sont situés transversalement par rapport à la conduite d'alimentation séparée à une certaine distance l'une de l'autre et un certain nombre de poutres (33) qui font saillie à partir du transporteur de transfert (14) et qui sont insérées dans lesdites ouvertures.

8. Agencement de tampon selon la revendication 7, dans lequel les surfaces de guide (36) sont disposées dans une section d'extrémité supérieure d'un cadre de machine (7) qui est une composante de chaque segment d'ascenseur (2a), et que les moyens de support (37) sont disposés dans une partie avant des poutres en saillie (33) qui sont des composants du transporteur de transfert (14).

9. Ascenseur destiné à être placé dans une conduite d'alimentation pour des pièces de bois qui sont transportées perpendiculairement à leur direction longitudinale, comprenant un plan de transport porteur de bois formé à partir d'un certain nombre d'éléments de transport sans fin (3) qui sont parallèles les uns aux autres et qui ont une extrémité tournante supérieure et une extrémité tournante inférieure (5, 6), un certain nombre de supports (4) répartis le long de la longueur des éléments de transport, un cadre de machine (7) qui est supporté sur un cadre (12) d'une manière qui permet le pivotement par l'intermédiaire d'un arbre (23), et que, grâce à l'influence d'un moyen de commande et d'actionnement (24) permet au plan de transport d'être pivoté dans un plan vertical et donc d'occuper soit une première soit une deuxième position angulaire par rapport au plan horizontal, **caractérisé en ce qu**'il comprend une première et une deuxième condition de fonctionnement pour entraîner les éléments de transport (3) dans deux directions de transport opposées (15A, 15B), un mécanisme d'articulation du genou qui présente un plan (20a), ledit plan étant relié au cadre de machine (7) par l'intermédiaire d'un arbre horizontal (47c) d'une manière qui permet le pivotement en communication avec l'extrémité tournante inférieure (6), et ledit mécanisme étant ainsi relié d'une manière qui permet le pivotement par l'intermédiaire d'une série d'arbres horizontaux (47a, 47b , 47c) avec le cadre (12) ou avec une autre unité stationnaire;
- en ce que le plan (20a), lors du placement du cadre de machine (7) dans sa première position angulaire, forme une glissière de matériau (45) où le plan est situé à un angle vers le bas loin du plan de transport, lesdites pièces de bois sont guidées au-dessus de la glissière de matériau lorsque les éléments de transport se déplacent dans la première direction de transport (15A);
- en ce que le plan (20a), lors du placement du cadre de machine (7) dans sa deuxième position angulaire, forme un compartiment de l'ascenseur (21 a) où le plan est situé à un angle vers le haut vers le plan de transport, lesdits supports (4) recueillant des pièces de bois depuis le compartiment d'ascenseur lorsque les éléments de transport se déplacent dans la deuxième direction de transport (15A).

10. Ascenseur selon la revendication 9, dans lequel lorsqu'il est placé dans sa première position angulaire, le cadre de machine (7) est pivoté sur l'arbre (23) si bien que le plan de transport portant du bois des éléments de transport (3) est essentiellement parallèle au plan horizontal et lorsqu'il est placé dans sa deuxième condition de fonctionnement, le cadre de machine (7) est pivoté sur l'arbre (23) que le plan de transport portant du bois des éléments de transport (3) a occupé un angle avec le plan horizontal auquel le plan de transport est incliné d'un angle allant vers un niveau supérieur.
